# EUROPÄISCHE PATENTSCHRIFT

(11) **EP 2 438 101 B1**
(45) Veröffentlichungstag und Bekanntmachung des Hinweises auf die Patenterteilung: **15.05.2013**
(21) Anmeldenummer: 10724451.9
(22) Anmeldetag: 02.06.2010
(51) Int. Cl.: B32B 5/18, B32B 7/12, B32B 37/12, B32B 27/40, B60R 13/02, C08G 18/22, C08G 18/28, C08G 18/48, C08J 9/12, C08J 9/236, C08G 18/12

(54) **VERBUNDTEILE ENTHALTEND PLASTISCH VERFORMBAREN POLYURETHANHARTSCHAUMSTOFF, KLEBSTOFF UND ABDECKMATERIAL**
COMPOSITES WHICH CONTAIN A THERMOFORMABLE POLYURETHANE RIGID FOAM, ADHESIVE AND COATING MATERIAL.
MATÉRIAUX COMPOSITES CONTENANT UNE MOUSSE DE POLYURÉTHANE THERMOFORMABLE, ADHÉSIF ET MATÉRIAU DE REVÊTEMENT.

(30) Priorität: 05.06.2009 EP 09162055; 18.12.2009 EP 09179942
(43) Veröffentlichungstag der Anmeldung: 11.04.2012
(73) Patentinhaber: BASF SE, 67056 Ludwigshafen (DE)
(72) Erfinder: ALEMDAROGLU, Fikri, Emrah, 34738 Erenköy/Istanbul (TR); PACHECO GONZALEZ, Alfonso, 08203 Sabadell (Barcelona) (ES); PARTUSCH, Georg, 49448 Lemförde (DE)
(86) Internationale Anmeldenummer: PCT/EP2010/057675
(87) Internationale Veröffentlichungsnummer: WO 2010/139708

(56) Entgegenhaltungen:
- WO-A1-01/10637
- FR-A1- 2 654 385
- US-A- 3 975 316
- US-A1- 2006 051 595

## Beschreibung

Die vorliegende Erfindung betrifft ein Verfahren zur Herstellung von Verbundteilen, bei dem man einen thermoformbaren Polyurethan-Hartschaumstoff vorlegt und mit Abdeckmaterial verklebt, wobei als Klebstoff ein feuchtigkeitshärtender Polyurethanklebstoff eingesetzt wird, der durch in Kontakt bringen mit einer wässrigen Katalysatorlösung gehärtet wird, wobei als wässrigen Katalysatorlösung eine wässrige Alkalimetallsilicat-Lösung eingesetzt wird. Weiter betrifft die vorliegende Erfindung ein Verbundteil, erhältlich nach einem solchen Verfahren, sowie die Verwendung des Verbundteils in Fahrzeugen, insbesondere als Dachhimmel.

Plastisch verformbare Polyurethan-Hartschaumstoffe, im Folgenden auch als thermoformbare Polyurethan-Hartschaumstoffe bezeichnet, und deren Verwendung als Innenverkleidung in Kraftfahrzeugen ist bekannt und beispielsweise beschrieben im "Kunststoffhandbuch, Band 7, Polyurethane", Carl Hanser Verlag, 3. Auflage 1993, Kapitel 6.5.4.1. Dabei wird der plastisch verformbare Polyurethanhartschaumstoff bei der Herstellung der Innenverkleidung in einer Form plastisch verformt und entweder während des Verformungsschritts oder nach erfolgter Verformung mit Abdeckmaterialien kaschiert. Als Abdeckmaterialien werden beispielsweise Verstärkungsmaterialien wie Glasfasermatten und/oder Dekormaterialien, wie beispielsweise Vliesstoffe verwendet. Diese Abdeckmaterialien werden während oder nach dem plastischen Verformen mit Hilfe eines Klebstoffs, meist auf Basis von Polyurethan, auf den Polyurethan-Hartschaumstoff aufgeklebt. Dabei ist es insbesondere von Vorteil, wenn das Kaschieren mit Abdeckmaterialien in einem Schritt zusammen mit dem plastischen Verformen erfolgen kann. Solche plastisch verformbaren Polyurethan-Hartschaumstoffe und das Kaschieren dieser thermoformbaren Polyurethan-Hartschaumstoffe mit Abdeckmaterialien ist beispielsweise in EP 437787 und DE 4333795 beschrieben.

Üblicherweise werden Klebstoffe auf Basis von Polyurethan zum Verkleben von Polyurethanhartschaumstoff und dem Abdeckmaterial eingesetzt. Insbesondere feuchtigkeitshärtende Einkomponenten-Klebstoffe sind besonders bevorzugt. Dabei werden die Klebstoffe auf den noch nicht verpressten Hartschaumstoff aufgetragen, mit Wasser besprüht, mit den Abdeckmaterialien kaschiert und bei erhöhter Temperatur in einer Form verpresst.

Als feuchtigkeitshärtende Einkomponenten-Klebstoffe werden vorzugsweise isocyanatterminierte Polyurethanprepolymere eingesetzt, die mit Katalysatoren versehen sind. Solche feuchtigkeitshärtende Einkomponenten-Klebstoffe, die zinnbasierte Katalysatoren oder tertiäre Amine als Katalysatoren aufweisen, sind beispielsweise in EP 464483 beschrieben. Nachteilig an solchen Klebstoffen ist, dass diese nur begrenzt lagerstabil sind, und häufig nur eine geringe Verarbeitungszeit aufweisen. Weiter sind Zinnorganische Verbindungen aus toxikologischer sicht bedenklich.

In WO 2004/033519 wird eine feuchtigkeitshärtende Polyurethanzusammensetzung mit einem auf Bismut basierendem Katalysator beschrieben. Bismutverbindungen sind zwar weniger toxisch als zinnorganische Verbindungen, allerdings weisen auch Bismutkatalysierte feuchtigkeitshärtende Systeme nur eine geringe Lagerfähigkeit und eine kurze Verarbeitungszeit auf. Weiter führt sowohl die Verwendung von Aminbasierten, Zinnbasierten und auch Bismutbasierten Katalysatoren zur Emission von Stoffen, die in einem abgeschlossenen Raum, wie beispielsweise der Fahrgastzelle eines Automobils, zur Geruchsbelästigung führen.

FR 2 654 385 A1 offenbart ein Verfahren zur Herstellung eines Autodachhimmels als Verbundteil, wobei ein Polyurethanschaum und eine Glasfasermatte mit einem feuchtigkeitshärtenden NCO-Prepolymer (NCO-Gehalt von 8-12 Gew.%; auf Basis von technischem MDI) und Wasser, das einen Katalysator enthalten kann, versetzt werden und bei 60 °C thermogeformt werden.

Die Anforderungen an im Automobilinnenbereich eingebaute plastisch verformbare Polyurethanhartschaumstoffe, die meist als Verkleidungsteile im Dachbereich, so genannte Dachhimmel, eingesetzt werden, sind vielschichtig. So müssen diese eine gewisse Steifigkeit aufweisen und dürfen keine störenden Substanzen emittieren, die beispielsweise zu Geruchsbildung führen. Eine besonders wichtige Funktion des Dachhimmels ist dessen Beitrag zur Akustik. Hier ist es insbesondere Aufgabe Luftgeräusche, den sogenannten Luftschall, zu reduzieren. Die Güte dieser Dachhimmeleigenschaften hängt entscheidend von den Eigenschaften der verwendeten plastisch verformbaren Polyurethan-Hartschaumstoffe sowie der verwendeten Klebstoffe ab. Für eine gute Luftschallabsorption sind Dachhimmel mit einer möglichst hohen Luftdurchlässigkeit erstrebenswert.

Aufgabe der vorliegenden Erfindung war es daher ein Verfahren zur Herstellung von Verbundteilen, umfassend thermoformbaren Polyurethan-Hartschaumstoff, Abdeckmaterial und Klebstoff, zu liefern, wobei der Klebstoff mit wenig oder bevorzugt ohne toxikologisch bedenkliche Katalysatoren gehärtet wird, eine lange Lager- und Verarbeitungszeit aufweist und durch möglichst geringe Emissionswerte zu einer geringen Geruchsbelästigung des Fertigprodukts beiträgt. Weiter war es Aufgabe der vorliegenden Erfindung Verkleidungsteile, insbesondere Dachhimmel für Automobile zu liefern, die hervorragende akustische Eigenschaften haben und nicht zur Geruchsbelästigung in der Fahrgastzelle führen.

Die erfindungsgemäße Aufgabe wurde gelöst durch ein Verfahren zur Herstellung von Verbundteilen, bei dem man einen thermoformbaren Polyurethanhartschaumstoff vorlegt und mit Abdeckmaterial verklebt, wobei als Klebstoff ein feuchtigkeitshärtender Polyurethanklebstoff eingesetzt wird, der durch in Kontakt bringen mit einer wässrigen Katalysatorlösung gehärtet wird, wobei als wässrigen Katalysatorlösung eine wässrige Alkalimetallsilicat-Lösung eingesetzt wird.

Als Abdeckmaterialien werden dabei vorzugsweise übliche, zur Abdeckung von thermoformbaren Polyurethan-Hartschaumstoffen eingesetzte Materialien verwendet. Diese umfassen Glasfasermatten, Weichschaumstofflagen, Stoffe, wie Gewebe, Gewirke und Vliesstoffe, sowie Kombinationen aus den üblichen Abdeckmaterialien.

Als thermoformbarer Polyurethan-Hartschaumstoff kann jeder übliche thermoformbare Polyurethan-Hartschaumstoff eingesetzt werden. Solche Polyurethan-Hartschaumstoffe sind beispielsweise beschrieben in EP 437787, DE 4333795 und DE102004062540. Diese sind vorzugsweise offenporig und emittieren vorzugsweise keine Substanzen, die zur Geruchsbildung führen. In einer bevorzugten Ausführungsform wird ein thermoformbarer Polyurethanhartschaumstoff im Sinn der Erfindung erhalten indem man a) organische Polyisocyanate mit b) Polyetherole, enthaltend b1) 2 bis 4-funktionelles Polyoxyalkylenpolyol mit einer Hydroxylzahl von 150 bis 650 und einem Anteil an primären Hydroxylgruppen von größer 70 % und b2) di- bis trifunktionelles Polyoxyalkylenpolyol mit einer Hydroxylzahl von 25 bis 40 und einem Anteil an primären Hydroxylgruppen von größer 70 %, gegebenenfalls c) Kettenverlängerungs-und/oder Vemetzungsmittel, d) Treibmittel, e) Katalysatoren und gegebenenfalls f) Hilfsmittel und Zusatzstoffe zu einer Reaktionsmischung vermischt und diese Reaktionsmischung ausreagieren lässt.

Erfindungsgemäße thermoformbare Polyurethan-Hartschaumstoffe können, vorzugsweise bei Werkzeugtemperaturen von 80 bis 160 °C, besonders bevorzugt von 100 bis 150 °C, plastisch verformt werden. Dabei werden als Einsatzstoffe a) bis f) übliche, in der Polyurethanchemie bekannte Einsatzstoffe verwendet. Das Polyoxyalkylenpolyole b1) enthält vorzugsweise mindestens 30 Gew.-%, besonders bevorzugt mindestens 50 Gew.-% Ethylenoxid. Das Polyoxyalkylenpolyole b2) enthält vorzugsweise mindestens 50 Gew.-%, besonders bevorzugt mindestens 80 Gew.-% Propylenoxid.

Neben den genannten Polyoxyalkylenpolyolen b1) und b2) können auch weitere Polyhydroxyverbindungen, wie weitere Polyetherole, Polyesterole oder andere, gegenüber Isocyanat reaktive Verbindungen, wie Polythiole oder Polyamine eingesetzt werden. Vorzugsweise beträgt der Gewichtsanteil der Verbindungen b1) und b2) an dem Gesamtgewicht der Komponente b) mindestens 50 Gew.-%, besonders bevorzugt mindestens 70 Gew.-% und insbesondere mindestens 80 Gew.-%. Dabei beträgt das Verhältnis von Polyoxyalkylenpolyole b1) und b2) vorzugsweise 0,8 : 1 bis 1,5 : 1.

Als Kettenverlängerungs- und/oder Vernetzungsmittel c) zur Herstellung des thermoformbaren Polyurethan-Hartschaumstoffs wird vorzugsweise Dipropylenglycol und/oder Tripropylenglycol eingesetzt.

Unter einem feuchtigkeitshärtende Polyurethanklebstoff wird im Rahmen der Erfindung eine Mischung, enthaltend ein Isocyanatgruppen aufweisendes Prepolymer, oder das Isocyanatgruppen aufweisendes Prepolymer selbst verstanden, wobei die Mischung mindestens 50 Gew.-%, vorzugsweise zu mindestens 80 Gew.-% und insbesondere zu mindestens 95 Gew.-% aus einem Isocyanatgruppen aufweisenden Prepolymer aufweist. Weiter kann ein erfindungsgemäßer feuchtigkeitshärtender Polyurethanklebstoff weitere Additive, wie oberflächenaktive Substanzen, Inhibitoren, wie Diglycol-bis-chlorformiat oder ortho-Phosphorsäure, Weichmacher, anorganische Füllstoffe, wie Sand, Kaolin, Kreide, Bariumsulfat, Siliziumdioxid, Oxidationsstabilisatoren, Farbstoffe und Pigmente, Stabilisatoren, z.B. gegen Hydrolyse, Licht, Hitze oder Verfärbung, anorganische und/oder organische Füllstoffe, Emulgatoren, Flammschutzmittel, Alterungsschutzmittel, Haftvermittler und Verstärkungsmittel sowie in der Polyurethanchemie gebräuchliche Katalysatoren enthalten. Dabei liegt die Viskosität des erfindungsgemäßen feuchtigkeitshärtenden Polyurethanklebstoffs vorzugsweise in einem Bereich von 500 bis 5000 mPas, besonders bevorzugt von 1000 bis 3000 mPas, gemessen bei 25°C nach DIN 53 018.

Als isocyanatgruppenhaltiges Prepolymer wird im Rahmen der Erfindung das Umsetzungsprodukt von Polyisocyanaten mit höhermolekularen Verbindungen, die zumindest zwei gegenüber Isocyanaten reaktive Gruppen aufweisen, gegebenenfalls Verbindungen mit einer gegenüber Isocyanaten reaktiven Gruppe sowie gegebenenfalls Kettenverlängerungs- und/oder Vernetzungsmitteln verstanden, wobei das Polyisocyanat im Überschuss eingesetzt wird.

Als Polyisocyanate können für die Herstellung des isocyanatgruppenhaltiges Prepolymers alle aus dem Stand der Technik bekannten aliphatischen, cycloaliphatischen und aromatischen zwei- oder mehrwertigen Isocyanate sowie beliebige Mischungen daraus eingesetzt werden. Vorzugsweise werden aromatische zwei- oder mehrwertigen Isocyanate eingesetzt. Beispiele sind 4,4', 2,4' und 2,2'-Diphenylmethandiisocyanat, die Mischungen aus monomeren Diphenylmethandiisocyanaten und höherkernigen Homologen des Diphenylmethandiisocyanats (Polymer-MDI), Tetramethylendiisocyanat, Hexamethylendiisocyanat (HDI), Isophorondiisocyanat (IPDI), 1,5-Naphthalindiisocyanat (NDI), 2,4,6-Toluoltriisocyanat und 2,4- und 2,6-Toluoldiisocyanat (TDI), oder Mischungen daraus.

Besonders bevorzugt werden 2,4-Toluoldiiisocyanat, 2,6-Toluoldiiisocyanat, 2,4'-Diphenylmethandiisocyanat und 4,4'-Diphenylmethandiisocyanat und höherkernige Homologe des Diphenylmethandiisocyanats (Polymer-MDI) sowie Gemische dieser Isocyanate, insbesondere eine Mischung aus 2,4'-Diphenylmethandiiso-cyanat und 4,4'-Diphenylmethandiisocyanat als Polyisocyanat (a) eingesetzt.

Als höhermolekulare gegenüber Isocyanaten reaktive Verbindungen mit zumindest zwei gegenüber Isocyanaten reaktiven Gruppen können für die Herstellung des isocyanatgruppenhaltigen Prepolymers alle Verbindungen mit zumindest zwei gegenüber Isocyanatgruppen reaktiven Gruppen eingesetzt werden. Diese weisen ein Molekulargewicht von mindestens 400 g/mol auf. Vorzugsweise werden eingesetzt Polyesterole, Polyetherole oder Polyether-Polyesterole, die beispielsweise durch Alkoxylierung von Polyestern erhalten werden können.

Polyetherole werden nach bekannten Verfahren, beispielsweise durch anionische Polymerisation mit Alkalihydroxiden oder Alkalialkoholaten als Katalysatoren und unter Zusatz mindestens eines Startermoleküls, das 2 bis 5, vorzugsweise 2 bis 4 und besonders bevorzugt 2 bis 3, insbesondere 2 reaktive Wasserstoffatome gebunden enthält, oder durch kationische Polymerisation mit Lewis-Säuren, wie Antimonpentachlorid oder Bortrifluorid-Etherat, aus einem oder mehreren Alkylenoxiden mit 2 bis 4 Kohlenstoffatomen im Alkylenrest hergestellt. Weiter können als Katalysatoren auch Multimetallcyanidverbindungen, sogenannte DMC-Katalysatoren, eingesetzt werden. Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Die Alkylenoxide können einzeln, alternierend nacheinander oder als Mischungen verwendet werden. Bevorzugt werden 1 ,2-Propylenoxid, Ethylenoxid oder Mischungen aus 1,2-Propylenoxid und Ethylenoxid verwendet.

Als Startermolekül kommen vorzugsweise Wasser oder 2- und 3-wertige Alkohole in Betracht, wie Ethylenglykol, 1,2-oder 1,3-Propandiol, Diethylenglykol, Dipropylenglykol, 1,4-Butandiol, Glycerin und Trimethylolpropan.

Die bevorzugten Polyetherpolyole, besonders bevorzugt Polyoxypropylen- oder Polyoxypropylen-polyoxyethylen-polyole, besitzen eine Funktionalität von 2 bis 5, besonders bevorzugt von 2 bis 3 und Molekulargewichte von 400 bis 9.000, vorzugsweise 1.000 bis 6.000, besonders bevorzugt 1.500 bis 5.000 und insbesondere von 2.000 bis 4.000 g/mol. Besonders bevorzugt wird als Polyetherpolyol Polypropylenglykol mit einem gewichtsmittleren Molekulargewicht von 1500 bis 2500 g/mol eingesetzt.

Neben den Höhermolekularen Verbindungen mit zumindest zwei gegenüber Isocyanatgruppen reaktiven Gruppen können auch Verbindungen mit nur einer gegenüber Isocyanaten reaktiven Gruppe eingesetzt werden. Dabei handelt es sich vorzugsweise Polyethermonoole, die ausgehend von monofunktionellen Startermolekülen, beispielsweise Ethylenglycolmonomethylether, analog zu den oben beschriebenen Polyetherolen erhalten werden. Dabei beträgt das Molekulargewicht der Polyethermonoole vorzugsweise 100 bis 1000 g/mol. Wenn Polyethermonoole eingesetzt werden, beträgt das Gewichtsverhältnis von Polyethetmonool zu Polyetherpolyol vorzugsweise 1:30 bis 4:1.

Gegebenenfalls können zur Herstellung des isocyanatgruppenhaltigen Prepolymers auch Kettenverlängerungs- und/oder Vernetzungsmittel eingesetzt werden. Die Zugabe der Kettenverlängerungs- und/oder Vernetzungsmittel kann vor, zusammen mit oder nach der Zugabe der Polyole erfolgen. Als Kettenverlängerungsmittel und/oder Vemetzungsmittel werden Substanzen mit einem Molekulargewicht von vorzugsweise kleiner 400 g/mol, besonders bevorzugt von 60 bis 350 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können einzeln oder in Form von Mischungen eingesetzt werden. Werden Kettenverlängerer eingesetzt, sind 1,3-und 1,2-Propandiol, Dipropylenglycol, Tripropylenglycol 1,3 Butandiol besonders bevorzugt.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht von Polyisocyanaten, höhermolekularen gegenüber Isocyanat reaktiven Verbindungen und Kettenverlängerungsmitteln und/oder Vernetzungsmitteln zum Einsatz.

Die Isocyanatprepolymere sind erhältlich, indem vorstehend beschriebene Polyisocyanate im Überschuss, beispielsweise bei Temperaturen von 30 bis 100°C, bevorzugt bei etwa 80°C, mit den höhermolekularen Verbindungen mit mindestens zwei gegenüber Isocyanaten reaktiven Gruppen, gegebenenfalls Verbindungen mit einer gegenüber Isocyanaten reaktiven Gruppe sowie gegebenenfalls Kettenverlängerungs- und/oder Vernetzungsmittel zum Prepolymer umgesetzt werden. Dabei werden Polyisocyanat, höhermolekularen Verbindungen mit mindestens zwei gegenüber Isocyanaten reaktiven Gruppen, gegebenenfalls Verbindungen mit einer gegenüber Isocyanaten reaktiven Gruppe sowie gegebenenfalls Kettenverlängerungs- und/oder Vernetzungsmittel vorzugsweise in einem Verhältnis von Isocyanatgruppen zu gegenüber Isocyanaten reaktiven Gruppen von 1,5 : 1 bis 15 : 1, vorzugsweise 1,8 : 1 bis 8 : 1 miteinander vermischt. Besonders bevorzugt werden zur Herstellung der Isocyanatprepolymere höhermolekularen Verbindungen mit mindestens zwei gegenüber Isocyanaten reaktiven Gruppen, gegebenenfalls Verbindungen mit einer gegenüber Isocyanaten reaktiven Gruppe sowie gegebenenfalls Kettenverlängerungs- und/oder Vernetzungsmittel in einem Verhältnis miteinander vermischt, dass der NCO-Gehalt des hergestellten Prepolymers im Bereich von 5 bis 30, insbesondere von 10 bis 25 Gew.-%, bezogen auf das Gesamtgewicht des hergestellten Isocyanatprepolymers, liegt. Anschließend können vorzugsweise flüchtige Isocyanate abgetrennt werden, vorzugsweise durch Dünnschichtdestillation. Dabei liegt die Viskosität der Isocyanatprepolymere vorzugsweise bei 100 bis 5000 mPas bei 25°C. Erfindungsgemäße Isocyanatprepolymere auf Basis von Toluoldiisocyanat weisen dabei typischerweise eine Viskosität von 500 bis 3000 mPas auf, während erfindungsgemäße Isocyanatprepolymere auf Basis von Diphenylmethandiisocyanat typischerweise eine Viskosität von 600 bis 3000 mPas aufweisen, jeweils bei 25°C. Die Mittlere Isocyanatfunktionalität der Isocyanatprepolymere beträgt vorzugsweise 2,0 bis 2,9, besonders bevorzugt 2,1 bis 2,6.

Der feuchtigkeitshärtende Polyurethanklebstoff kann auch Katalysatoren enthalten. Diese umfassen beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin verwendet. Ebenso kommen als Katalysatoren organische Metallverbindungen in Betracht, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-etyhlhexanoat und Bismut-octanoat oder Mischungen davon. Die organischen Metallverbindungen können allein oder in Kombination mit basischen Aminen eingesetzt werden.

Vorzugsweise werden weniger als 2 Gew.%, besonders bevorzugt weniger als 1 Gew.-% und insbesondere kein Katalysator bzw. Katalysatorkombination, bezogen auf das Gewicht des Isocyanatgruppen aufweisenden Prepolymers zugegeben.

Bei der Herstellung des erfindungsgemäßen Verbundteils wird vorzugsweise zwischen 20 bis 300 g, besonders bevorzugt 50 bis 200 g feuchtigkeitshärtender Polyurethanklebstoff pro m² des thermoformbaren Polyurethan-Hartschaumstoffs eingesetzt.

Die Härtung des feuchtigkeitshärtenden Polyurethanklebstoffs erfolgt durch in Kontakt bringen mit einer wässrigen Katalysatorlösung. Diese umfasst wässrigen Alkalimetallsilicat-Lösungen.

Als wässrige Alkalimetalllösungen können wässrige Lösungen bekannter und kommerziell vertriebener Alkalimetallsilikate der allgemeinen Formel M₂O·SiO₂ eingesetzt werden, die allgemein als "Wasserglas" bezeichnet werden, wobei M für ein Alkalimetall steht und das Verhältnis von M₂O : SiO₂ variabel ist. Vorzugsweise wird als Alkalimetall Natrium eingesetzt. Dabei können auch Mischungen unterschiedlicher Alkalimetallsilikate verwendet werden, Beispielsweise Mischungen, enthaltend Natriumsilikat und Kaliumsilikat, wobei das Mischungsverhältnis Na₂O : K₂O vorzugsweise 99,5 :0,5 bis 25 : 75 beträgt. Das molare Verhältnis von M₂O zu SiO₂ kann in üblichen Bereichen variieren und liegt meist zwischen 4 und 0,2, vorzugsweise zwischen 1,5 und 3. Wird das bevorzugte Natriumsilikat eingesetzt, variiert das Gewichtsverhältnis von Na₂O : SiO₂ beispielsweise von 1 : 1,6 bis 1 :4, vorzugsweise von 1 : 2 bis 1 : 3,5 und insbesondere 1: 2 bis 1 : 3,3.

Die Konzentration des Alkalisilikats in der wässrigen Lösung kann je nach den speziellen Erfordernissen an Viskosität oder dem erforderlichen Wassergehalt angepasst werden und liegt üblicherweise bei 0,01 bis 80 vorzugsweise 0,1 bis 80, besonders bevorzugt 10 bis 50 und insbesondere 15 bis 35 Gew.-% Alkalimetallsilikat in der wässrigen Lösung. Dabei wird vorzugsweise eine Alkalimetallsilikatlösung eingesetzt, die nicht gesättigt ist. Diese wird erhalten durch Zugabe von Wasser zu einer gesättigten Alkalimetallsilikatlösung.

Typischerweise liegt das Gewichtsverhältnis von wässriger Katalysatorlösung und feuchtigkeitshärtendem Polyurethanklebstoff zwischen 1 : 2 und 5 : 1, vorzugsweise zwischen 1 : 1 und 2 : 1. Dies entspricht einem Auftrag von 10 bis 150 g pro m² pro zu beklebender Seite thermoformbarem Polyurethanhartschaumstoff.

Bei der Herstellung der erfindungsgemäßen Verbundteile wird üblicherweise der thermoformbare Polyurethan-Hartschaumstoff vorgelegt. Auf diesen wir dann einseitig oder vorzugsweise zweiseitig der feuchtigkeitshärtende Polyurethanklebstoff aufgebracht und mit der Alkalimetallsilikatlosung besprüht. Anschließend wird das Abdeckmaterial aufgebracht und der Verbundkörper in einer Form bei erhöhten Temperatur, vorzugsweise bei 60 bis 180 °C, besonders bevorzugt bei 100 bis 150 °C geformt und der feuchtigkeitshärtende Polyurethanklebstoff gehärtet. Bei Einhaltung der bevorzugten Mengenverhältnisse wird bei dieser Verarbeitung ein Aufschäumen des feuchtigkeitshärtenden Polyurethanklebstoffs erreicht, wodurch die Offenzelligkeit des thermoformbaren Polyurethanhartschaumstoffs nicht beeinträchtigt wird.

Gegenstand der Erfindung ist auch ein Verbundteil, erhältlich nach einem erfindungsgemäßen Verfahren.

Das erfindungsgemäße Verbundteil wird vorzugsweise als Verkleidungsteil in Land, Wasser und Luftfahrzeugen, besonders bevorzugt als Verkleidungsteile in Automobilen, insbesondere als Dachhimmel eingesetzt.

Das erfindungsgemäße Verfahren kann auf vorhandenen Produktionsanlagen durchgeführt werden. Dabei sind die als Klebstoff eingesetzten feuchtigkeitshärtenden Polyurethanprepolymere lange lagerstabil und auch bei Raumtemperatur oder leicht erhöhter Temperatur lange verarbeitbar, da kein oder nur verhältnismäßig wenig Katalysator im feuchtigkeitshärtenden Polyurethanklebstoff enthalten ist.

Überraschenderweise wurde gefunden, dass das erfindungsgemäße Verfahren auch zu einer vorteilhaften Versteifung des thermogeformten Polyurethan-Hartschaumstoffs führt. Weiter führt ein erfindungsgemäßes Verfahren zu einer schnelleren Entformzeit und damit zu einer wirtschaftlicheren Ausnutzung der Produktionsanlagen.

Im Folgenden wird die Erfindung anhand von Beispielen verdeutlicht.

Ausgangsmaterialen
- Polyol 1:: Propylenglycol-gestartetes Polyetherpolyol (OHZ 30 mg KOH/g) mit überwiegend primären OH Gruppen (Zusammensetzung 80% Propylenoxid, 20% Ethylenoxid)
- Polyol 2:: Methylpolyethylenglycol (OHZ 1113 mg KOH/g)
- Isocyanat :: Polymeres Diisocyanatodiphenylmethan (PMDI)
- Katalysator 1:: Organozinnester
- Katalysator 2:: Natriumsilikat M₂O : SiO₂ Verhältnis: SiO₂:Na₂O 3,3:1
- Inhibitor 1:: Diglycol-bis-Chlorformiat (DIBIS)
- Inhibitor 2:: ortho-Phosphorsäure 85 %

### Beispiel:

### Herstellung des Polyurethanklebstoffs:

In einem Rührkessel wurden 70 Gew.-Teile eines PMDI und 0,01 Gew.-Teile Inhibitor 1 vorgelegt und unter Rühren auf 80°C erwärmt. Hierzu wurden langsam 29,6 Gew.-Teile eines Gemisches aus Polyol 1 und Polyol 2 (Gewichtsverhältnis 1:2) zugegeben. Nach Ende der Zugabe wurde 120 Minuten nachgerührt, auf 25°C gekühlt und abgefüllt. Der NCO Gehalt und die Viskosität des erhaltenen Polyurethanprepolymers lag bei 21 % bzw. bei 500 mPas. Anschließend wurden 0,02 Gew.-Teile Inhibitor 1 und 0,03 Gew.-Teile Inhibitor 2 zugegeben.

### Herstellung des Schaumstoffs aus dem Polyurethanklebstoff

91,8 Gew.-Teile des Polyurethanklebstoffs und 8,2 Gew.-Teile wässriger Katalysator 2-Lösung (50 %ig) wurden miteinander vermischt und die Reaktionsmischung zum Polyurethanschaumstoff ausreagieren lassen. Dabei wurde ein offen- und grobzelliger Schaumstoff erhalten.

### Vergleich:

### Herstellung des Polyurethanklebstoffs:

Es wurde wie bei Beispiel verfahren, wobei des Weiteren 0,2 Teile Katalysator 1 zugegeben wurden.

### Herstellung des Schaumstoffs aus dem Polyurethanklebstoff:

91,8 Gew.-Teile des Polyurethanklebstoffs gemäß Vergleich werden mit 8,2 Gew.-Teilen Wasser vermischt und die Reaktionsmischung zum Polyurethanschaumstoff ausreagieren lassen. Dabei wurde ein offen- und grobzelliger Schaumstoff erhalten.

Die Reaktivität der Reaktionsmischungen zur Herstellung der Polyurethanschaumstoffe gemäß Beispiel und Vergleich sowie der Viskosität und Viskositätsanstieg der Polyurethanklebstoffe gemäß Beispiel und Vergleich nach 2 h Rühren bei 55°C über einem Wasserbad sind in Tabelle 1 aufgeführt:

**Tabelle 1:**

| | Vergleich | Beispiel |
|---|---|---|
| Startzeit (s) | 50 | 61 |
| Abbindezeit (s) | 208 | 175 |
| Steigzeit (s) | 330 | 300 |
| Dichte (g/L) | 26,3 | 27,8 |
| Zellstruktur | grob, offen | grob, offen |
| Viskosität des Polyurethanklebstoffs [mPas bei 25°C] | 775 | 364 |
| Viskosität (45°C) des Polyurethanklebstoffs (Reaktionsmischung?) nach 2 h Rühren bei 55°C über einem Wasserbad [mPas bei 45°C] | 1245 | 432 |

Die Tabelle zeigt, dass der Schaumstoff gemäß Beispiel neben der gewünschten offenen und groben Zellstruktur die schnellere Reaktionsgeschwindigkeit aufweist. Durch die verlängerte Start- und Abbindezeit bei kürzerer Steigzeit wird eine verbesserte Verarbeitbarkeit und eine schnellere Zykluszeit erreicht. Weiter zeigt ein erfindungsgemä-βer Polyurethanklebstoff eine deutlich verbesserte Stabilität bei den Bedingungen vor Auftragung, der sogenannten Walzenstabilität, die durch 2 Stunden Rühren bei 55 °C über einem Wasserbad simuliert wurden.

Mit Hilfe des feuchtigkeitshärtenden Polyurethanklebstoffs wird unter Verwendung der erfindungsgemäßen Katalyse (Beispiel) sowie der Katalyse gemäß Vergleichsbeispiel ein Dachhimmel hergestellt. Dabei wurde folgende Schichtabfolge eingesetzt:
1. Non Woven 190 g/m2 Fa.Fytisa (1,1 mm)
2. Mat GlassFaser 100+/-10 g/m2 Owens Corning Vetrotex
3. Wasser 25 g/m2
4. Kleber 100 g/m2
5. Thermoformbarer Polyurethanhartschaumstoff RG20 Elastoflex E 3943/120 10,6 mm
6. Kleber 100 g/m2
7. Wasser 25 g/m2
8. Mat GlassFaser 100+/-10 g/m2 Owens Corning Vetrotex
9. Non Woven PET mit LDPE in unsichtbare Seite (45g/m² PET Faser+15 g/m² LDPE). Fa Fytisa (0,25 mm)

Das Material wurde im Formwerkzeug bei 130°C auf eine Dicke von 12 mm verpresst und die Steifigkeit des hergestellten Dachhimmels wurde gemäß ASTM D790 J949 bestimmt. Tabelle 2 zeigt die mechanischen Eigenschaften der hergestellten Dachhimmel:

**Tabelle 2**

| | | Vergleich | Beispiel |
|---|---|---|---|
| 3-Punkt-Biegeversuch (DIN 53423) | | | |
| | Biegefestigkeit (kPa) | 340 | 480 |
| | Durchbiegung (mm) | 21,9 | 10,3 |
| | E-Modul (kPa) | 2119 | 5881 |
| Steifigkeit eines kompletten Dachhimmels mit 100 g/m² Klebstoff (N/mm²) | | 7,9 | 10,6 |

Der komplette Dachhimmel gemäß Beispiel weist eine höhere Steifigkeit (9,6 N/mm²)und E-Modul (5881 kPa) auf als ein Dachhimmel gemäß Vergleichsversuch.

## Patentansprüche

1. Verfahren zur Herstellung von Verbundteilen aus einem thermoformbaren Polyurethan-Hartschaumstoff und einem Abdeckmaterial, bei dem man einen thermoformbaren Polyurethanhartschaumstoff vorlegt und mit Abdeckmaterial verklebt, wobei als Klebstoff ein feuchtigkeitshärtender Polyurethanklebstoff eingesetzt wird, der durch in Kontakt bringen mit einer wässrigen Katalysatorlösung gehärtet wird, wobei als wässrige Katalysatorlösung eine wässrige Alkalimetallsilicat-Lösung eingesetzt wird.

2. Verfahren nach Anspruch 1, **dadurch gekennzeichnet**, das als Alkalimetallsilikat Natriumsilikat eingesetzt wird.

3. Verfahren nach Anspruch 1 oder 2, **dadurch gekennzeichnet, dass** die wässrige Alkalimetallsilicat-Lösung von 0,1 bis 80 Gew.-% Alkalimetallsilikat enthält.

4. Verfahren nach einem der Ansprüche 1 bis 3, **dadurch gekennzeichnet, dass** die wässrige Katalysatorlösung in einer Menge von 10 bis 150 g/m² thermoformbarem Polyurethan-Hartschaumstoff aufgetragen wird.

5. Verfahren nach einem der Ansprüche 1 bis 4, **dadurch gekennzeichnet, dass** der feuchtigkeitshärtende Polyurethanklebstoff zu mindestens 80 Gew.-%, bezogen auf das Gesamtgewicht des feuchtigkeitshärtenden Polyurethanklebstoffs, isocyanatterminiertes Prepolymer enthält, das durch Vermischen eines stöchiometrischen Überschusses von aromatischem Isocyanat mit höhermolekularen Verbindungen mit mindestens zwei gegenüber Isocyanaten reaktiven Gruppen und gegebenenfalls Verbindungen mit nur einem gegenüber Isocyanaten reaktiven Gruppe sowie gegebenenfalls Kettenverlängerungs- und / oder Vernetzungsmittel erhältlich ist.

6. Verfahren nach Anspruch 5, **dadurch gekennzeichnet, dass** das isocyanatterminierte Prepolymer einen NCO-Gehalt von 5 bis 30 Gew.-% aufweist.

7. Verfahren nach einem der Ansprüche 1 bis 6, **dadurch gekennzeichnet, dass** neben der wässrigen Alkalimetallsilicat-Lösung keine weiteren Katalysatoren zur Aushärtung des Klebstoffs eingesetzt werden.

8. Verfahren nach einem der Ansprüche 1 bis 7, **dadurch gekennzeichnet, dass** der feutigkeitshärtende Polyurethanklebstoff in einer Menge von 20 bis 300 g/m² thermoformbare Polyurethan-Hartschaumstoff eingesetzt wird.

9. Verfahren nach einem der Ansprüche 1 bis 8, **dadurch gekennzeichnet, dass** der thermoformbare Polyurethanschaumstoff, das Abdeckmaterial und der feuchtigkeitshärtende Polyurethanklebstoff in einer Form mit einer Formtemperatur von 60 bis 180°C verklebt werden.

10. Verbundteil, erhältlich nach einem Verfahren gemäß einem der Ansprüche 1 bis 9.

11. Verwendung des Verbundteils nach Anspruch 10 in Fahrzeugen.

## Claims

1. A process for producing a composite part from a thermoformable rigid polyurethane foam and a lining material, by introducing a thermoformable rigid polyurethane foam and bonding it adhesively to lining material, the adhesive used being a moisture-curing polyurethane adhesive which is cured by being contacted with an aqueous catalyst solution, the aqueous catalyst solution used being an aqueous alkali metal silicate solution.

2. The process according to claim 1, wherein the alkali metal silicate used is sodium silicate.

3. The process according to claim 1 or 2, wherein the aqueous alkali metal silicate solution comprises from 0.1% to 80% by weight of alkali metal silicate.

4. The process according to any of claims 1 to 3, wherein the aqueous catalyst solution is applied in an amount of 10 to 150 g/m² of thermoformable rigid polyurethane foam.

5. The process according to any of claims 1 to 4, wherein the moisture-curing polyurethane adhesive comprises at least 80% by weight, based on the total weight of the moisture-curing polyurethane adhesive, of isocyanate-terminated prepolymer which is obtainable by mixing a stoichiometric excess of aromatic isocyanate with relatively high molecular weight compounds having at least two isocyanate-reactive groups and, optionally, compounds having only one isocyanate-reactive groups, and also, optionally, chain extender and/or crosslinking agent.

6. The process according to claim 5, wherein the isocyanate-terminated prepolymer has an NCO content of 5% to 30% by weight.

7. The process according to any of claims 1 to 6, wherein other than the aqueous alkali metal silicate solution no further catalysts are used to cure the adhesive.

8. The process according to any of claims 1 to 7, wherein the moisture-curing polyurethane adhesive is used in an amount of 20 to 300 g/m² of thermoformable rigid polyurethane foam.

9. The process according to any of claims 1 to 8, wherein the thermoformable polyurethane foam, the lining material, and the moisture-curing polyurethane adhesive are bonded in a mold having a mold temperature of 60 to 180°C.

10. A composite part obtainable by a process according to any of claims 1 to 9.

11. The use of the composite part according to claim 10 in vehicles.

## Revendications

1. Procédé pour la fabrication de pièces composites à partir d'une mousse rigide de polyuréthane thermoformable et d'un matériau de recouvrement, dans lequel on dispose au préalable une mousse rigide de polyuréthane thermoformable et on la colle avec un matériau de recouvrement, en utilisant comme adhésif un adhésif polyuréthane durcissant à l'humidité, qui est durci par mise en contact avec une solution aqueuse de catalyseur, en utilisant comme solution aqueuse de catalyseur une solution aqueuse de silicate de métal alcalin.

2. Procédé selon la revendication 1, **caractérisé en ce qu'**on utilise comme silicate de métal alcalin du silicate de sodium.

3. Procédé selon la revendication 1 ou 2, **caractérisé en ce que** la solution aqueuse de silicate de métal alcalin contient de 0,1 à 80 % en poids de silicate de métal alcalin.

4. Procédé selon l'une quelconque des revendications 1 à 3, caractérisé en ce la solution aqueuse de catalyseur est appliquée en une quantité de 10 à 150 g/m² de mousse rigide de polyuréthane thermoformable.

5. Procédé selon l'une quelconque des revendications 1 à 4, **caractérisé en ce que** l'adhésif polyuréthane durcissant à l'humidité contient à raison d'au moins 80 % en poids, par rapport au poids total de l'adhésif polyuréthane durcissant à l'humidité, de prépolymère à terminaison isocyanate, qui peut être obtenu par mélange d'un excès stoechiométrique d'isocyanate aromatique avec des composés de masse moléculaire élevée, comportant au moins deux groupes réactifs vis-à-vis d'isocyanates, et éventuellement des composés comportant un seul groupe réactif vis-à-vis d'isocyanates ainsi qu'éventuellement des prolongateurs de chaîne et/ou des agents de réticulation.

6. Procédé selon la revendication 5, **caractérisé en ce que** le prépolymère à terminaison isocyanate présente une teneur en NCO de 5 à 30 % en poids.

7. Procédé selon l'une quelconque des revendications 1 à 6, **caractérisé en ce qu'**outre la solution aqueuse de silicate de métal alcalin on n'utilise pas d'autres catalyseurs pour le durcissement de l'adhésif.

8. Procédé selon l'une quelconque des revendications 1 à 7, **caractérisé en ce que** l'adhésif polyuréthane durcissant à l'humidité est utilisé en une quantité de 20 à 300 g/m² de mousse rigide de polyuréthane thermoformable.

9. Procédé selon l'une quelconque des revendications 1 à 8, **caractérisé en ce que** la mousse de polyuréthane thermoformable, le matériau de recouvrement et l'adhésif polyuréthane durcissant à l'humidité sont collés dans un moule ayant une température de moule de 60 à 180 °C.

10. Pièce composite, pouvant être obtenue conformément à un procédé selon l'une quelconque des revendications 1 à 9.

11. Utilisation de la pièce composite selon la revendication 10 dans des véhicules.
